Europäisches Patentamt

European Patent Office

Office européen des brevets

(19)

(11) Publication number:

**0 314 518**
**A2**

(12)

# EUROPEAN PATENT APPLICATION

(21) Application number: **88310207.1**

(22) Date of filing: **31.10.88**

(51) Int. Cl.⁴: **G 11 B 5/66**
**G 11 B 11/10**

(30) Priority: **29.10.87 JP 274767/87**
**28.12.87 JP 335559/87**

(43) Date of publication of application:
**03.05.89 Bulletin 89/18**

(84) Designated Contracting States:
**AT BE CH DE ES FR GB GR IT LI LU NL SE**

(71) Applicant: **MITSUI PETROCHEMICAL INDUSTRIES, LTD.**
**2-5, Kasumigaseki 3-chome Chiyoda-ku**
**Tokyo 100 (JP)**

**NIPPON HOSO KYOKAI**
**No 2-1, Jinnan 2-chome Shibuya-ku**
**Tokyo 150 (JP)**

(72) Inventor: **Sato, Ryuji**
**NHK Science and Technical Research Laboratories**
**1-10-11, Kinuta Setagaya-ku Tokyo (JP)**

**Mizumoto, Kunihiko**
**4-1, Yusyudai-nishi 2-chome**
**Ichihara-shi Chiba (JP)**

**Togami, Yuji**
**2, Yusyudai-higashi 3-chome**
**Ichihara-shi Chiba (JP)**

**Saito, Nobuo**
**NHK Science and Technical Research Laboratories**
**1-10-11, Kinuta Setagaya-ku Tokyo (JP)**

**Morishita, Tadataka**
**NHK Science and Technical Research Laboratories**
**1-10-11, Kinuta Setagaya-ku Tokyo (JP)**

(74) Representative: **Myerscough, Philip Boyd et al**
**J.A.Kemp & Co. 14, South Square Gray's Inn**
**London, WC1R 5EU (GB)**

(54) **Magnetooptical recording media.**

(57) a magnetooptical recording medium characterized in that at least two magnetic alloy films, each containing a rare earth metal and a transition metal, and at least two transparent films are laminated on a substrate so that each one of said magnetic alloy films and each one of said transparent films are alternatively placed one upon another, the film thickness of said magnetic alloy film being 5-250 Å, the film thickness of said transparent film being 5-4000 Å, and the total film thickness of said magnetic alloy film and said transparent film being less than 1μm.

EP 0 314 518 A2

**Description**

## MAGNETOOPTICAL RECORDING MEDIA

### FIELD OF THE INVENTION

This invention relates to magnetooptical recording media having a multilayered magnetic alloy film and more particularly to magnetooptical recording media having excellent read out characteristics with an increased Kerr rotation angle of the magnetic alloy film.

Furthermore, the invention relates to magnetooptical recording media having a multilayered magnetic alloy film and more particularly to magnetooptical recording media in which the Curie point thereof has been lowered without lowering a Kerr rotation angle of the magnetic alloy film.

### BACKGROUND OF THE INVENTION

It is known that magnetic alloy films comprising transition metals such as iron and cobalt, and rare earth elements such as terbium (Tb) and gadolinium (Gd) have a magnetic easy axis perpendicular to the film and are capable of forming a small magnetic domain with magnetization anti parallel to the magnetization of the film by irradiating the film with coverged light. By corresponding the existence or nonexistence of this inverse magnetic domain to "1" or "0", so-called magnetooptical recording can be performed to record a digital signal on such magnetic alloy films as mentioned above.

In a magnetooptical recording media used as a magnetooptical recording as mentioned above, readout of pieces of information recorded on the recording layer is performed generally by converging light such as laser beam on the recording layer and detecting a rotation angle $\theta_k$ of a plane of polarization rotated by the Kerr effect. Such Kerr rotation angle $\theta_k$ is an angle which is inherently decided according to the kind of material used for making the magnetic alloy film constituting the recoding layer. And when this Kerr rotation angle becomes larger, the pieces of information can clearly be distinguished from one another and an error in reading the information decreases. Accordingly, an important property of the magnetic alloy film used as the recording film is such that the magnetic alloy film has a large Kerr rotation angle.

However, in the case of Tb-Fe type magnetic alloy film conventionally used as a magnetooptical recording medium, there was such a problem that the Kerr rotation angle $\theta_k$ of the film is as small as about 0.3° and accordingly an optical system to detect this Kerr rotation angle $\theta_k$ becomes very complicated.

In order to solve the above-mentioned problem, there has been made an attempt to provide a transparent dielectric film (an enhancement film) between a substrate and a magnetic alloy film, thereby making the Kerr rotation angle $\theta_k$ larger by multiple reflection. In this attempt to make the Kerr rotation angle larger by providing the transparent dielectric film between the substrate and the magnetic alloy film, however, there were involved such problems that a definite relation between the refractive index of the substrate and that of the magnetic alloy film must be satisfied and, on that account, it is not easy to select the kind of material used as the transparent dielectric film and thus it is difficult to find a measure regarded as optimum for increasing the Kerr rotation angle of the magnetic alloy film.

Further, there has been proposed a procedure to make a magnetic alloy thinner to about 250 Å and provide the thus thinned magnetic alloy film with a reflection film in order to make larger Kerr rotation angle of said magnetic alloy film. In this procedure, however, Feraday effect contributes to $\theta_k$ as well as Kerr effect, with the result that the way of presetting the thickness of the magnetic alloy film becomes complicated. Furthermore, there was such problem that the provision of the reflection film may further complicate the film-forming process.

Furthermore, it is known in this connection that generally magnetic alloy films come to have a high Curie point when they are found to have a large Kerr rotation angle (the 42nd Meeting the Magnetic Society of Japan, Reserch Materials, 42-1,1985,P.1-9). The magnetic alloy film used as a recording layer desirable have a low Curie point, and generally 100-200°C is considered as optimum. This is because, if the recording layer has a high Curie point at the time when information is recorded on said recording layer, the output of laser for recording must be made large, and realistically it was not possible to record and erase information at high speed on the recording layer having Curie point of higher than 200°C.

Accordingly, as recording layers of magnetooptical recording media, there have been long desirous of such recording layers as having a low Curie point but without lowering the Kerr rotation angle.

Incidentally, there have been developed magnetooptical recording media having alternately laminated an amorphous magnetic film comprising PtMnSb, etc. and a magnetic film comprising TbFe, etc. with the view of improving coercive force of the recording layer (Journal of Magnetic Society of Japan, 11(2), 173, 1987) and recording media alternately laminated a magnetic film comprising Ni$_3$Fe, etc. and a magnetic film comprising γ-FeMn, etc. with the view of improving magnetic properties (the 10th Conevention of Applied Magnetics Association of Japan, Abridged Address Collection, p.409,1986). In such recording media as cited above, however, it was not possible to expect the effect of lowering Curie point without lowering the Kerr rotation angle of the recording layer.


## OBJECT OF THE INVENTION

The present invention is to solve such problems as mentioned hereinbefore, and an object of the invention is to provide magnetooptical recording media having excellent read out characteristics with a extraordinarily increased Kerr rotation angle.

A further object of the invention is to provide magnetooptical recording media in which a Curie point of the material constituting the recording layer is lowered without lowering a Kerr rotation angle of the recording layer, thereby facilitating the writing or reading of information.


## SUMMARY OF THE INVENTION

The first magnetooptical recording media of the present invention are characterised in that at least two magnetic alloy films, each containing rare earth metals and transition metals, and at least two transparent films are laminated on a substrate so that each one of said magnetic alloy films and each one of said transparent films are alternately placed one upon another, the film thickness of said magnetic alloy film being 5-250 Å, the film thickness of said transparent film being 5-4000 Å, and the total film thickness of said magnetic alloy films and said transparent films being less than 1 μm.

The second magnetooptical recording media of the present invention are characterized in that at least two magnetic alloy films, each containing a rare earth metal and a transition metal, and at least two metallic films are laminated on a substrate so that each one of said magnetic alloy films and each one of said metallic films are alternately placed one upon another, the film thickness of said magnetic alloy film being 5-200 Å, and the film thickness of said metallic film being 5-200 Å.

The first magnetooptical recording media of the present invention as illustrated above have such a structure that at least two magnetic alloy films and at least two transparent films, both individually having a specific film thickness as mentioned above, are alternately placed one upon another on a transparent substrate in the manner as aforesaid and, therefore, the Kerr rotation angle of the recording layer of said media becomes extraordinarily large with excellent read out characteristics.

According to the second magnetooptical recording media of the present invention, furthermore, by virtue of placing at least two magnetic alloy films and at least two metalic films alternately on a transparent substrate in the manner as aforesaid, it becomes possible to lower only the Curie point of the amorphous magnetic alloy films without varying magnetooptical charactaristics such as the Kerr rotation angle of said magnetic alloy films. On that account, it becomes possible that even magnetic alloy films, which inherently have a high Curie point, will come to have a low Curie point while maintaining a large Kerr rotation angle. Accordingly, magnetic alloy films having a Curie point to of higher than 200° C, which could not be used heretofore in connection with the laser output problem as aforesaid, can now be used as recording layers of magnetooptical recording media when said magnetic alloy films are so designed as to have such a structure as mentioned above.


## BRIEF DESCRIPTION OF THE DROWINGS

Fig. 1 is a sectional view showing the principal part of the first magnetooptical recording medium 10 of the present invention.

Fig. 2 is a sectional view showing the principal pat of the second magnetooptical recording medium 20 of the present invention

2 ... Magnetic alloy film     4 ... Transparent film

6 ... Protective film

8 ... substrate     12 ... Metallic film


## DETAILED DESCRIPTION OF THE INVENTION

The first and second magnetooptical recording media of the present invention are illustrated below in detail.

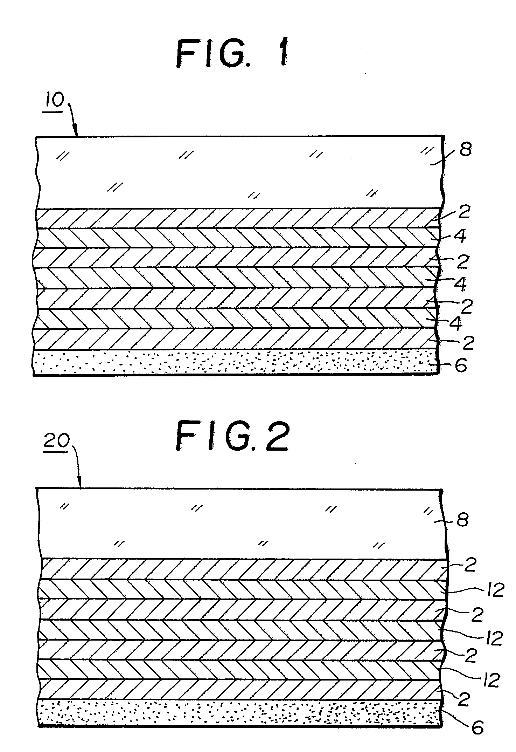

The first magnetooptical recording medium 10 of the present invention has such as structure, for example as shown in Fig. 1, wherein at least two magnetic alloy films 2, each containing a rare earth metal and a transition metal, and at least two transparent films 4 are laminated on a substrate so that each one of said magnetic alloy films and each one of said transparent films are alternately placed one upon another. In Fig. 1, the numeral "6" is a protective layer for preventing the magnetic alloy film 2 from oxidation, and the numeral "8" is a substrate for imparting a proper rigidity to the magnetooptical recording medium 10.

The first magnetooptical recording media of the present invention are not limited only to those having the structure as shown in Fig. 1, but may be modified in various way. For instance, a protective film may be provided between the substrate 8 and magnetic alloy film 2, or the protective layer 6 may be omitted.

[Substrate]

The substrate 8 is desirably excellent in transparency. Practically speaking, besides inorganic materials for the substrate 8 such as glass, aluminum oxide, etc., useful organic materials are polymethyl methacrylates, polycarbonates, polymer alloys of polycarbonate and polystyrene, amorphous polyolefins as disclosed in U.B. Patent 4,614,778, poly-4-methyl-1-pentene, epoxy resins, polyether sulfones, polysulfones, polyether imidos, ethylene/tetracyclododecene copolymers, etc.

[Protective layer]

The protective film 6 is applied to protect the magnetic alloy film 2 on the outermost layer side, and materials for the protective film 2 are required to have a transparency through which the recording light may penetrate and non-magnetic properties not to exert penetrate influences on the magnetic alloy film 2.

As the materials for the protective film 6 which are capable of satisfying the above-mentioned requirements, there are preferably used inoraganic materials such as silicon oxide $SiO_x$ ($0 < x \leqq 2$), etc. In addition thereto, there may also be used such materials, for example, as plasma depositing polymer films of $CH_4$, $CS_2$, Teflon, etc., or UV-curing organic coat films. Furthermore, metallic films can also be used as the protective film 6.

[Magnetic alloy film]

The magnetic alloy films 2 are optical recording films capable of recording and reading out prescribed information by irradiating the recording film with converged light. In the present invention, the reading out layer for reading out and reading out information is designed to have a multi-layer structure comprising the magnetic alloy films 2.

The magnetic alloy films 2 are those which comrise alloys of transition metals, such as iron and cobalt, and rare earth elements, such as terbium (Tb) and gadolinium (Gd), or other materials (for example, oxide magnetic materials such as garnet), and which have a magnetic easy axis perpendicular to the film. In the present invention, the magnetic alloy films 2 are preferably amorphous alloy films, but are not particularly limited thereto.

The magnetic alloy films 2 of the present invention comprise (i) at least one element selected from among 3d transition metals, (ii) at least one element selected from among rare earth elements and (iii) other elements.

Useful 3d transition metals (i) include Fe, Co, Ti, V, Cr, Mn, Ni, Cu and Zn. Of these metals, however, Fe or Co or both of them are preferred.

The 3d transition metals in the magnetic alloy film 2 are contained preferably in an amount of 5-80 atom%, more preferably 5-75 atom%, and in particular preferably 5-70 atom%.

The magnetic alloy film comprise, besides the above-mentioned (i), (ii) at least one rare earth element selected from the group consisting of Gd, Tb, Dy, Ho, Er, Tm, Yb, Lu, La, Ce, Pr, Nd, Pm, Sm and Eu.

Of these elements, preferably used are Gd, Tb, Dy, Ho, Nd, Sm and Pr.

At least one rare earth element selected from the above-mentioned group in the magnetic alloy film 2 is contained preferably in an amount of 5-50 atom%, more prefarably 8-45% atom%, and in particular preferably 10-40 atom%.

In the present invention, with the view of improving the magnetic alloy films 2 in corrosion resitance, Ni, Ti, Pt, Pd, Nb, Ta, Cr, etc. as (iii) other elements may be contained in said magnetic alloy films 2 in addition to the above-illustrated components (i) and (ii).

The magnetic alloy films 2 having the above-mentioned composition become mangetic films which have a magnetic easy axis perpendicular to the film and most of them become magnetic films which can be used as perpendicular and magnetooptical recording media and in which a Kerr hysteresis loop exhibits favorably square-shape.

By the expression that the Kerr hysteresis loop exhibits favorably square-shape as used herein is meant that a ratio $\theta_{k2}/\theta_{k1}$ of the Kerr rotation angle ($\theta_{k1}$) at a saturation magnetization in the maximum external magnetic field to the Kerr rotation angle ($\theta_{k2}$) at a remanent magnetization in the external magnetic field is, for example,

4

at least 0.8.

Particularly, the magnetic alloy films 2 are preferably comprise TbFeCo or GdFeCo. When the magnetic alloy film 2 comprises TbFeCo, the atom% of Co/(Fe + Co) is preferably 0-80, and when said film comprises GdTbCo, the atom% of Co/(Fe + Co) is preferably 0-60.

[Transparent film]

Materials for the transparent film used in the present invention are those which have a refractive index n of $1.3 \leqq n \leqq 4.0$, preferably $1.8 \leqq n \leqq 4.0$, and an extinction coefficient K of $K \leqq 0.5$, preferably $K \leqq 0.2$. Concretely, useful materials are nitrides such as $SiN_x$ (preferred range of X is $0 < x \leqq 4/3$), $AlN_x$ (preferred range of x is $0 < x \leqq 1$), $AlSiN_x$, $BN_x$, etc., oxides such as $SiO_x$ ($0 < x \leqq 2$), $Tb-SiO_2$, $Mg-SiO_2$, $Al_2O_3$, $SiO_2-Al_2O_3$, $Mg-SiO_2-Al_2O_3$, $Tb-SiO_2-Al_2O_3$, $Ba-SiO_2$, $Ba-Al_2O_3$, $Ba-SiO_2-Al_2O_3$, $Te-Al_2O_3$, $Mg-Al_2O_3$, $TiO_2$ $TiO$, $ZnO$, $ZrO_2$, $Ta_2O_5$, $Nb_2O_5$, $CeO_2$, $SnO_2$, $TeO_2$, indium-tin oxides, etc., and $ZnS$, $CdS$, $ZnSe$, $SiC$, $Si$, $MgF_2$, etc.

In the first magnetooptical recording medium of the present invention, it is desirable that each magnetic alloy film 2 has a film thickness of 5-250 Å, preferably 20-200 Å, and each transparent film has a film thickness of 5-4000 Å, preferably 20-2000 Å, and in particular preferably 100-500 Å. The total film thickness of the magnetic alloy film 2 and transparent film 4 is less than 1μm.

The use of the magnetic alloy film having a film thickness of less than 5 Å is undesirable, because said magnetic alloy film comes to mingle with the trasnparent film and no laminated sturucture is attained and, on one hand, the use of the magnetic alloy film having a film thickness exceeding 250 Å is undesirable, because a loss of light per one lamination layer becomes large and no addition effect of the lower lamination layers can be exhibited.

The use of the transparent film having a film thickness of less than 5 Å is undesirable, because said transparent film comes to mingle with the magnetic alloy film and no prescribed characteristics can be obtained and, on one hand, the use of the transparent film having a film thickness exceeding 4000 Å is undesirable, because the Kerr rotation angle varies largely owing to a minute variation in film thickness of said transparent film and a very strict control of the film thickness is required, with the result that difficulties are involved in the film formation.

Furthermore, the use of the magnetic alloy film 2 and transparent film 4 in such a manner that the total film thickness of these two films exceeds 1μm is undesirable, because all magnetic alloy films do not come simultaneously within the focal depth of light used for recording and reading out the prescribed information on said magnetic alloy films.

Though not particularly limited, the protective layer 6 suitably has a film thickness of 500-2000 Å.

[Method of lamination]

As a method of forming at least two lamination layers by alternately placing the magnetic alloy film 2 upon the transparent film 4 in succession, there may be employed the conventionally known methods. Concretely, adoptable methods include such techniques as vacuum deposition, sputtering, alternate film formation by target change, substrate rotation, etc.

In the first magnetooptical recording media of the present invention as illustrated above, the Kerr rotation angle extraordinaly improves, because said media have such a structure wherein at least two lamination layers are laminated successively on a substrate, each lamination layer having alternately placed the magnetic alloy film having a specific film thickness upon the transparent film having a specific film thickness. For instance, a Tb-Fe type magnetic alloy film itself has a Kerr rotation angle of about 0.3°, whereas in the magnetoooptical recording medium comprising a total of 19 layers, each layer having alternately placed a Tb-Fe type magnetic alloy film having a film thickness of 100 Å upon a SiO transparent film, the Kerr rotation angle of said medium improves up to 10.3°.

The second magnetooptical recording media of the present invention are illustrated below in detail.

The magnetooptical recording medium 20, for example, as shown in Fig. 2, has a construction wherein at least two magnetic alloy films, each containing a rare earth metal and a transition metal, and at least two metallic films are laminated on a substrate so that each of the said magnetic alloy films 2 and each one of said metallic films 12 are alternately placed one upon another. In Fig. 2, the numeral "6" is a protective layer for preventing the magnetic alloy film 2 from oxidation, and the numeral "8" is a substrate for imparting a proper rigidity to the magnetooptical recording medium 20.

The second magnetooptical recording media of the present invention are not limited to the construction as shown in Fig. 2, but various modifications may be made. For instance, the lamination layer comprising the magnetic alloy film 2 and metallic film 12 may also be laminated on a relatively thick metallic film (non-magnetic layer).

In the magnetooptical recording medium 20 as illustrated above, the substrate 8, protective layer 6 and magnetic alloy layer 2 used may be the same as those used in the first magnetooptical recording medium 20 of the present invention. Accordingly, the metallic layer 12 is illustrated below in detail.

[Metallic layer]

Materials used for constituting the metallic layer 12 are desirably 3d transition metals such as Fe, Co, Ni, Cr, Ti, etc. or alloys thereof. Besides the above- mentioned transition metals, materials, constituting the metallic film 12 may be alloys containing Zr, Ta, Nb, Pd, Pt, Cu, Ag, Au, Zn and the like metals.

[Film thickness]

In the second magnetooptical recording media of the present invention, it is desirable that the magnetic alloy film 2 has a film thickness of 5-200 Å, preferably 20-200 Å, and the metallic film 12 has a film thickness of 5-200 Å, preferably 5-100 Å, and in particular preferably 5-50 Å. The use of the magnetic alloy film 2 and metallic film 12, both of which have film thickness of less than 5 Å, is undesirable, because both films come to mingle with each other and no laminated sturcture can be attained. On one hand, the use of the magnetic alloy film 2 and metallic film 12, both of which have a film thickness of larger than 200 Å, is undesirable, because a Curie point of the magnetic alloy film 2 cannot be decreased to about less than 200° C and hence a large output laser apparatus for recording is needed, and thus such films as mentioned above are of little real use.

The protective film may have, without particular limitation, a film thickness of about 650 Å.

The whole film thickness of the magnetooptical recording medium 10 may be 50-5000 Å, preferably 50-2000 Å.

[Method of lamination]

As a method of forming at least two lamination layers by alternately placing the magnetic alloy film 2 upon the metallic film 12 in succession, there may be employed the vacuum deposition method, sputtering method, alternate film formation method of substrate rotation method.

In the second magnetooptical recording media of the present invention as illustrated above, it becomes possible to decrease only the Curie point of the magnetic alloy film without lowering magnetooptical characteristics such as the Kerr rotation angle of said film, because said magnetooptical recording media have been so designed to have at least two lamination layers, each having alternately placed the magnetic alloy film having a film thickness of about 5-200 Å upon the metallic film having a film thickness of about 5-200 Å. On that accout, it is possible to impart a low Curie point to magnetic alloy films which have inherently a high Curie point, while maintaining a large Kerr rotation angle thereof as it is. Accordingly, magnetic alloy films having a Curie point to of higher than 200° C, which could not be used heretofore in connection with the laser output problem as aforesaid, can now be used as recording layers of magnetooptical recording media when said magnetic alloy films are so designed as to have such a structure as mentioned above.

In light of the foregoing, the present invention exhibits such excellent effects that in spite of improving the Kerr rotation angle of the recording layer, the Curie point of the material constituting said recording layer is lowered and writing or reading the prescribed information becomes drastically easy.

The present invention is illustrated below with reference to examples, but it should be construed that the invention is in no way limited to those examples.

Examples 1-9 and Comparative Example 1

The present Examples 1-9 are concerned with magnetooptical recording media having a structure as shown in Fig. 1, said recording media using a surface SiO layer as the protective film, a Fe-Tb magnetic layer as the magnetic alloy film, and a SiO layer as the transparent film. In each of Examples 1-9, the surface SiO layer, magnetic layer and SiO layer were individually varied in film thickness. Comparative Example 1 shows a magnetooptical recording medium comprising only one magnetic layer.

In a vacuum deposition apparatus having arranged two crucibles at two separate places, one crucible is filled with a Tb-Fe alloy, and the other is filled with SiO. Then, a magnetic alloy film and a transparent film are alternately deposited by heating the magnetic alloy and SiO in the crucible thereof with electron beam on a glass substrate being cooled with liquid nitrogen by switching alternately the shutters at the positions A and B. On the sample of each magnetooptical recording media thus prepared is deposited a SiO layer having a film thickness of 500-900 Å as the protective film. Kerr rotation angle of each sample was measured from the film surface side.

The $\theta_k$ of the mangetooptical recording media prepared in the foregoing examples were evaluated to depend on the SiO layer thickness as shown in Table 1, on the magnetic alloy film thickness as shown in Table 2, and on the surface SiO layer thickness as shown in Table 3.

## Table 1

EP 0 314 518 A2

$\lambda = 6328$ Å

| Example | Film thickness of surface SiO layer (Å) | Film thickness of magnetic layer (Å) | Film thickness of SiO layer (Å) | Number of magnetic layers | $\theta k$ (°) |
|---|---|---|---|---|---|
| 1 | 650 | 100 | 50 | 10 | 2.9 |
| 2 | 650 | 100 | 100 | 10 | 3.9 |
| 3 | 650 | 100 | 300 | 10 | 10.3 |
| Compar.Ex.1 | 650 | 100 | ——— | 1 | 1 |

## Table 2

$$\lambda = 6328 \overset{o}{A}$$

| Example | Film thickness of surface SiO layer $(\overset{o}{A})$ | Film thickness of magnetic layer $(\overset{o}{A})$ | Film thickness of SiO layer $(\overset{o}{A})$ | Number of magnetic layers | $\theta_k$ $(^o)$ |
|---------|------|------|------|------|------|
| 4 | 650 | 80 | 100 | 10 | 4.5 |
| 5 | 650 | 67 | 100 | 10 | 5.1 |
| 6 | 650 | 40 | 100 | 10 | 4.0 |

EP 0 314 518 A2

## Table 3

$\lambda$=6328 A

| Example | Film thickness of surface SiO layer ($\overset{o}{A}$) | Film thickness of magnetic layer ($\overset{o}{A}$) | Film thickness of SiO layer ($\overset{o}{A}$) | Number of magnetic layers | $\theta_k$ (°) |
|---------|---------|---------|---------|---------|---------|
| 7 | 500 | 100 | 50 | 10 | 1.1 |
| 8 | 650 | 100 | 50 | 10 | 2.9 |
| 9 | 900 | 100 | 50 | 10 | 1.1 |

EP 0 314 518 A2

Examples 10-14 and Comparative Example 2

The present examples are concerned with magnetooptical recording media having a structure as shown in Fig, 2, said recording media using $Tb_{39}Fe_{61}$ as the magnetic alloy film (Fe was used as the metallic film).

Using as targets (1) a composite target in which Tb chips are arranged in a prescribed proportion on Fe target and (2) Fe target, a lamination film of (1) and (2) was deposited, on a glass substrate using RF magnetron sputtering method, by rotating the substrate above the targets alternately during the time of depositing the film while preventing the rise of substrate tamperature by cooling with water.

The TbFe amorphous magnetic layer had a film thickness of 30 Å, and the Fe layer had a film thickness of 5-30 Å. The number of period of the lamination layer was preset so that the total thickness of the lamination layers becomes about 2000 Å. Kerr rotation angle and reflectivity were measured through the glass substrate side ($\lambda$=633nm).

The results obtained are shown in Table 4.

In Table 4, $\theta$k is Kerr rotation angle, R is reflectivity, Hc is coercive force, and Tc is Curie point.

## Table 4

| | Film thickness of Tb Fe layer (Å) | Film thickness of Fe layer (Å) | Tc (°C) | R (%) | $\theta$ k (° ) | $\sqrt{R \theta k}$ | Hc ( kOe) |
|---|---|---|---|---|---|---|---|
| Example 10 | 30 | 5 | 110 | 7 | 0.38 | 0.10 | 4.0 |
| 11 | 30 | 13 | 80 | 20 | 0.29 | 0.13 | 3.9 |
| 12 | 30 | 15 | 73 | 18 | 0.33 | 0.14 | 3.6 |
| 13 | 30 | 21 | 69 | 24 | 0.30 | 0.14 | 6.5 |
| Compar.Ex.2 | 2000 | 0 | 122 | 7 | 0.40 | 0.11 | 4.0 |

EP 0 314 518 A2

Examples 14-17 and Comparative Example 3

Magnetooptical recording media were prepared in substantially the same manner as in Examples 14-17 except that $Tb_{16}Fe_{30}Co_{24}$ was used as the amorphous magnetic alloy film.

The results obtained are shown in Table 5.

Table 5

| | Film thickness of Tb Fe Co layer (Å) | Film thickness of Fe layer (Å) | Tc ($^o$C) | R (%) | $\theta$k ($^o$ ) | $\sqrt{R\theta k}$ | Hc ( kOe) |
|---|---|---|---|---|---|---|---|
| Example 14 | 30 | 5 | 230 | 7 | 0.45 | 0.12 | 4.2 |
| 15 | 30 | 10 | 198 | 20 | 0.40 | 0.18 | 3.6 |
| 16 | 30 | 15 | 188 | 19 | 0.40 | 0.17 | 3.7 |
| 17 | 30 | 20 | 180 | 25 | 0.38 | 0.19 | 5.0 |
| Compar.Ex.3 | 2000 | 0 | 240 | 7 | 0.48 | 0.13 | 4.3 |

EP 0 314 518 A2

**Claims**

1. A magnetooptical recording medium characterized in that at least two magnetic alloy films, each containing a rare earth metal and a transition metal, and at least two transparent films are laminated on a substrate so that each one of said magnetic alloy films and each one of said transparent films are alternately placed one upon another, the film thickness of said magnetic alloy film being 5-250 Å, the film thickness of said transparent film being 5-4000 Å, and the total film thickness of said magnetic alloy film and said transparent film being less than 1μm.

2. The magnetooptical recording medium as claimed in claim 1, wherein in that the rare earth metal is at least one member selected from among Sm, Nd, Pr, Eu, Gd, Tb, Dy and Ho, and the transition metal is at least one member selected from among Fe, Co and Ni.

3. The magnetooptical recording medium as claimed in claim 1, wherein in that the magnetic alloy film is an amorphous magnetic alloy film.

4. The magnetooptical recording medium as claimed in claim 1, wherein in that the transparent film has a refractive index n of 1.3-4.0 and a extinction coefficeint K of $\leq 0.5$.

5. The mangetooptical recording medium as claimed in claim 1, wherein the transparent film is at least one member selected from among $SiO_x$ ($0 < x \leq 2$), ZnS, $MgF_2$, $A\ell N_x$ ($0 < x \leq 1$), ZnO, $SiN_x$ ($0 \leq x \leq 4/3$).

6. A magnetooptical recording medium characterized in that at least two magnetic alloy films, each containing a rare earth metal and a transition metal, and at least two metallic films are laminated on a substrate so that each one of said magnetic alloy films and each one of said metallic films are alternately placed one upon another, the film thickness of said magnetic alloy film being 5-200 Å and the film thickness of said metallic film being 5-200 Å.

7. The magnetooptical recording medium as claimed in claim 6, wherein in that the rare earth metal is at least one member selected from among Sm, Nd, Pr, Eu, Gd, Tb, Dy and Ho, and the transition metal is at least one member selected from among Fe, Co and Ni.

8. The magnetooptical recording medium as claimed in claim 6, wherein in that the metallic film is at least one member selected from among Fe, Co, Ni, Pd, Pt and Ti.

14

# FIG. 1

# FIG. 2